# EUROPÄISCHE PATENTANMELDUNG

(11) **EP 2 381 020 A2**
(43) Veröffentlichungstag der Anmeldung: **26.10.2011**
(21) Anmeldenummer: 11002065.8
(22) Anmeldetag: 12.03.2011
(51) Int. Cl.: D03C 7/04, H02K 7/08, F16C 32/06

(54) **Vorrichtung zum Bilden einer Dreherkante**

(30) Priorität: 20.04.2010 DE 102010015794
(71) Anmelder: Gebrüder Klöcker GmbH, 46325 Borken-Weseke (DE)
(72) Erfinder: Schwemmlein, Christoph, Dr., 46325 Borken-Weseke (DE); Hockemeyer, Kurt, 46325 Borken-Weseke (DE)
(74) Vertreter: Walther, Walther & Hinz GbR

(57) **Zusammenfassung**

Gegenstand der Erfindung ist eine Vorrichtung zum Bilden einer Dreherkante, umfassend einen Elektromotor, der Elektromotor umfassend einen Rotor (1) und einen Stator (10), wobei der Rotor (1) zwei Führungsöffnungen (3, 4) für die Dreherfäden (30, 40) aufweist, wobei ein Lagerring (20) für den Rotor (1) vorgesehen ist, wobei der Rotor (1) durch den Lagerring (20) mittels einer Luftlagerung gehalten ist, wobei der Rotor (1) eine umlaufende Lagerrinne (7) aufweist, wobei der Lagerring (20) korrespondierend zu der Form der Lagerrinne (7) eine umlaufende Lagerschulter (28) aufweist, wobei der Lagerring (20) im Bereich der Lagerschulter mehrere umfangsverteilt angeordnete Öffnungen (28a, 28b) zur Druckluftzufuhr aufweist.

## Beschreibung

Die Erfindung betrifft eine Vorrichtung zum Bilden einer Dreherkante, umfassend einen Elektromotor, der Elektromotor umfassend einen Rotor und einen Stator, wobei der Rotor zwei Führungsöffnungen für die Dreherfäden aufweist, wobei der Rotor im Stator durch einen Lagerring gehalten ist.

Eine Vorrichtung zum Bilden einer Dreherkante der eingangs genannten Art ist beispielsweise aus der EP 1 071 838 B9 bekannt. Hierbei weist der Rotor zwei in radialer Richtung zueinander beabstandet angeordnete Magnetringe auf, wobei korrespondierend hierzu der Stator einen Eisenkern mit entsprechenden Wicklungen zeigt. Die Konstruktion des Stators und des Rotors stellt somit den üblichen Teil eines Elektromotors dar.

Der Rotor besitzt darüber hinaus im Endbereich mindestens zwei Öffnungen zur Führung der Dreherfäden. Darüber hinaus ist der Rotor endseitig mit dem Stator durch Wälzlager gelagert. Beschrieben ist in dieser Literaturstelle allerdings auch eine berührungsfreie Lagerung des Rotors in dem Stator beispielsweise durch ein Luft- oder Magnetlager. Wie eine solche berührungsfreie Lagerung als Luft- oder Magnetlager ausgestaltet sein kann, ergibt sich aus dieser Literaturstelle allerdings nicht.

Die der Erfindung zugrunde liegende Aufgabe besteht demzufolge darin, ein funktionsfähiges Luftlager für die Lagerung des Rotors bei einer Dreherkantenvorrichtung bereitzustellen, die einen im Wesentlichen reibungsfreien Lauf des Rotors ermöglicht.

Zur Lösung der Aufgabe wird erfindungsgemäß vorgeschlagen, dass bei einer Vorrichtung zum Bilden einer Dreherkante der eingangs genannten Art ein Lagerring vorgesehen ist, wobei der Rotor durch den Lagerring mittels einer Luftlagerung gehalten ist, wobei der Rotor eine umlaufende Lagerrinne aufweist, wobei der Lagerring korrespondierend zu der Form der Lagerrinne eine umlaufende Lagerschulter aufweist, wobei der Lagerring im Bereich der Lagerschulter mehrere umfangsverteilt angeordnete Öffnungen zur Druckluftzufuhr aufweist. Vorteilhaft sind Lagerrinne und Lagerschulter im Querschnitt ineinandergreifend ausgebildet, was beispielsweise dadurch bewerkstelligt werden kann, dass die Ausbildung der Lagerrinne V, U oder W-förmig getroffen ist und die Lagerschulter korrespondierend hierzu die Negativform aufweist. Das heißt, dass die Ausbildung von Lagerrinne und Lagerschulter im Übergang zueinander derart ist, dass bei zugeführter Druckluft im Bereich der Lagerrinne und der Lagerschulter sowohl radiale als auch axiale Kräfte übertragen werden können. Es muss somit sichergestellt sein, dass der Rotor im Lagerring axial und radial gelagert ist.

Denkbar ist allerdings auch im Sinne einer kinematischen Umkehr den Lagerring mit einer z. B. V-förmig umlaufenden Lagerrinne zu versehen, und entsprechend den Rotor mit einer im Querschnitt winklig ausgebildeten, umlaufenden Lagerschulter auszustatten. Hierzu weist dann der Lagerring die entsprechenden Öffnungen im Bereich z. B. der Schenkel der V-förmigen Lagerrinne für die Druckluftzufuhr auf.

Durch ein solches Luftlager wird mithin eine Lagerung bereitgestellt, die im Wesentlichen reibungsfrei arbeitet, was bedeutet, dass die Antriebsleistung des Motors vermindert werden kann, was wiederum bedeutet, dass das Gewicht des Motors durch die verminderte Antriebsleistung ebenfalls reduziert werden kann. Dies hat wiederum zur Folge, dass aufgrund der geringeren Massenkräfte die Drehrichtungsumkehr schneller erfolgen kann. In diesem Zusammenhang ist darauf hinzuweisen, dass eine Dreherkantenvorrichtung nach einigen Umdrehungen in einer Richtung in die umgekehrte Richtung drehen muss, um die Verdrehung der Dreherfäden aufzuheben. Diese Problematik ist hinreichend aus dem Stand der Technik bekannt, und zwar insbesondere auch aus der bereits zuvor erwähnten EP 1 071 838 B9, und muss daher an dieser Stelle nicht näher erläutert werden.

Nach einem weiteren Merkmal der Erfindung ist vorgesehen, dass die Schenkel der im Querschnitt winkligen Lagerschulter der Lagerrinne umfangsverteilt einander gegenüberliegend Öffnungen für die Druckluftzufuhr aufweisen, wobei der Lagerring mehrere Anschlüsse zum Anschluss von Druckluftleitungen aufweist. In diesem Zusammenhang wird darauf hingewiesen, das wesentlich ist, dass die Druckluftzufuhr über sämtliche Öffnungen bei gleichem Druck erfolgt, um einen ruhigen Lauf des Rotors in dem Lagerring zu ermöglichen.

Anhand der Zeichnungen wird die Erfindung nachstehend beispielhaft näher erläutert.
- Fig. 1: zeigt die Vorrichtung in einer Seitenansicht im Schnitt gemäß der Linie I - I aus Fig.2, wobei allerdings die Dreherfäden eingezeichnet sind;
- Fig. 2: zeigt einen Schnitt gemäß der Linie II - II aus Fig. 1;
- Fig. 3: zeigt eine Seitenansicht aus Fig. 1 gemäß der Linie I - I.
- Fig. 4: zeigt schematisch in vergrößerter Darstellung die Art der Luftlagerung.

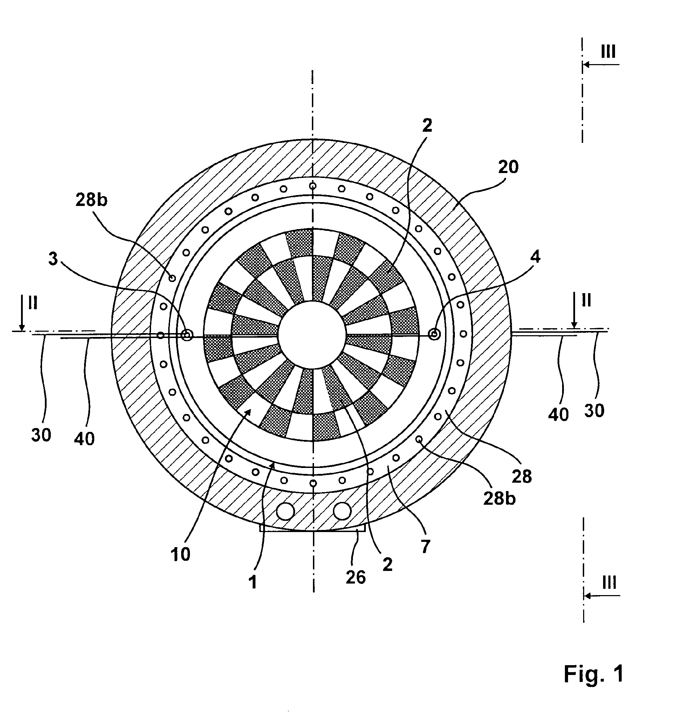

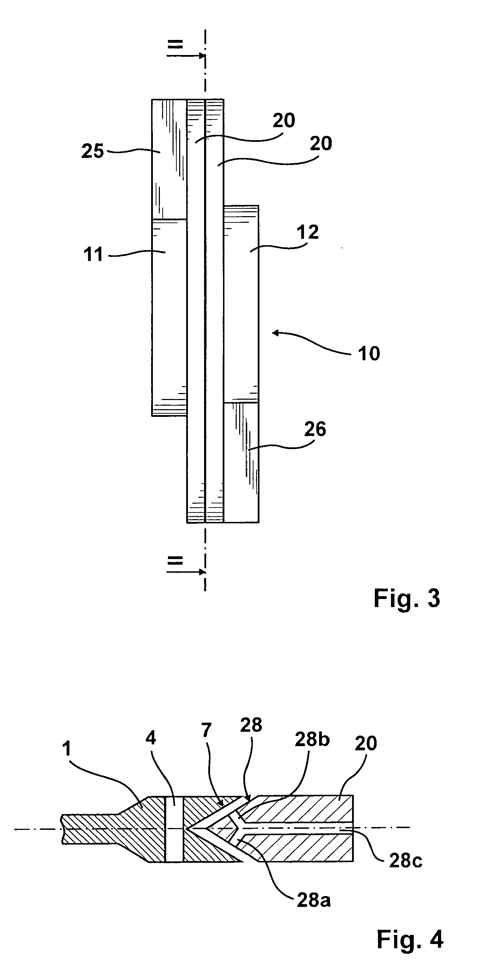

Gemäß der Figuren ist der Rotor mit 1 bezeichnet und der Stator mit 10. Darüber hinaus ist ein Lagerring 20 vorgesehen, der den Rotor 1 durch die erfindungsgemäße Luftlagerung aufnimmt. Hierauf wird später zurückzukommen sein. Der Stator besteht aus zwei Statorhälften 11 und 12, die unmittelbar benachbart zu dem mit 1 bezeichneten Rotor sind. Zur Halterung der beiden Statorhälften 11, 12 dienen die Bügel 25, 26. Die Halterung erfolgt hierbei im Einzelnen derart, dass zu jeder Seite der Vorrichtung ein Bügel 25, 26 vorgesehen ist, wobei jeder Bügel eine Statorhälfte 11, 12 aufnimmt und die Bügel am oberen Ende in der Figur 1 und Figur 3 mit dem Lagerring 20 verbunden ist. Der Rotor 1 besitzt des Weiteren Magnete 2, wobei die Polung der Magnete zu beiden Seiten des Rotors entgegengesetzt ist. Das heißt, dass der Magnet, der zu einer Seite der Oberfläche als Nordpol ausgebildet ist, ist auf der anderen gegenüberliegenden Seite des Rotors als Südpol ausgebildet. Die Anordnung der Magnete 2 auf dem Rotor ist derart, dass sich zwei kreisförmige Anordnungen von Magneten ergeben (Fig. 1). Auch dies ist aus dem Stand der Technik hinreichend bekannt und muss im Einzelnen nicht näher erläutert werden.

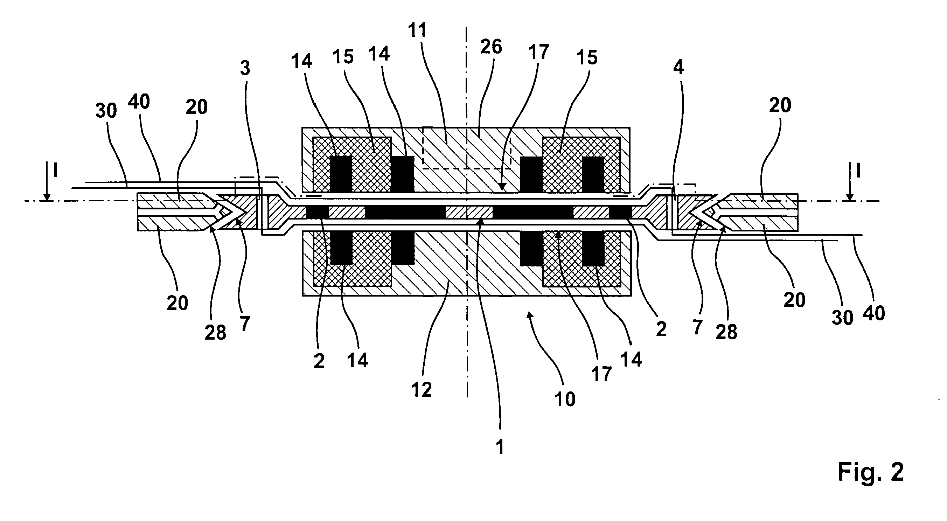

Die mit 11 und 12 bezeichneten Statorhälften besitzen Eisenkerne 14, mit entsprechenden Wicklungen 15, deren Enden auf die Magneten des Rotors 1 zugerichtet sind. Zwischen Rotor und Stator bzw. zwischen Rotor und Eisenkern des Stators befindet sich ein Luftspalt 17, indem die Dreherfäden 30, 40 geführt sind (Fig. 2). Die Führung der Fäden ergibt sich im Übrigen auch aus der Darstellung gemäß Fig. 1, gleichwohl der Schnitt an sich nicht beide Dreherfäden erkennen lassen würde. Erkennbar ist, dass der eine Dreherfaden 30 auf der einen linken Seite in der Figur 2 eingeführt wird, durch die eine Dreherfadenöffnung 3 auf die andere Seite des Rotors 1 geführt wird, durch den Luftspalt 17 verläuft und am entgegensetzten Ende, in der Darstellung gemäß Fig. 2 auf der rechten Seite, seitlich an dem Lagerring 20 vorbei herausgeführt wird. Der andere Dreherfaden 40 verläuft ebenfalls zunächst parallel unmittelbar benachbart zu dem zuvor beschriebenen Verlauf des Dreherfadens 30, jedoch wird dieser, ohne durch die Dreherfadenöffnung 3 geführt zu werden, an dem Rotor 1 vorbeigeführt, bis er zu der Dreherfadenöffnung 4 gelangt, wo er dann durchgeführt wird, um wieder auf der gleichen Seite wie der Dreherfaden 30. Die Ausbildung der Luftlagerung stellt sich nunmehr wie folgt dar und ist der vergrößerten Darstellung gemäß Fig. 4 zu entnehmen.

Der Rotor 1 besitzt hierbei eine V-förmig umlaufende Lagerrinne 7, wobei in der Lagerrinne 7 die im Querschnitt winklig umlaufende Lagerschulter 28 des Lagerringes 20 einliegt. Zwischen der Lagerschulter 28 und der V-förmigen Lagerrinne 7 besteht ein Abstand, wobei in der Lagerschulter 28 Luftdurchlässe 28a, 28b vorgesehen sind, die auf die Schenkel in der V-förmig umlaufenden Lagerrinne 7 zugerichtet sind. Durch diese Luftöffnungen gelangt Druckluft in den Bereich zwischen der Lagerrinne 7 einerseits und der im Querschnitt winkligen Lagerschulter 28 andererseits, die, da die Luftdurchlässe 28a, 28b, die durch eine Druckluftleitung 28c versorgt wird, umfangsverteilt auf der Lagerschulter angeordnet sind, dafür sorgen, dass sich zwischen Lagerrinne einerseits und Lagerschulter andererseits ein Luftpolster ausbildet, das den Rotor trägt. Hierbei ergibt sich mithin eine Lagerung, die im Wesentlichen reibungsfrei ist, was bedeutet, dass die Drehrichtungsumkehr des Rotors im Lagerring, die notwendig ist, um eine Verdrillung der Dreherfäden 30, 40 auf der einen Seite des Rotors aufzuheben, in sehr kurzen zeitlichen Abständen bei geringstem Energieaufwand erfolgen kann.

## Patentansprüche

1. Vorrichtung zum Bilden einer Dreherkante, umfassend einen Elektromotor, der Elektromotor umfassend einen Rotor (1) und einen Stator (10), wobei der Rotor (1) zwei Führungsöffnungen (3, 4) für die Dreherfäden (30, 40) aufweist,
**dadurch gekennzeichnet,**
**dass** ein Lagerring (20) für den Rotor (1) vorgesehen ist, wobei der Rotor (1) durch den Lagerring (20) mittels einer Luftlagerung gehalten ist, wobei der Rotor (1) eine umlaufende Lagerrinne (7) aufweist, wobei der Lagerring (20) korrespondierend zu der Form der Lagerrinne (7) eine umlaufende Lagerschulter (28) aufweist, wobei der Lagerring (20) im Bereich der Lagerschulter (28) mehrere umfangsverteilt angeordnete Öffnungen (28a, 28b) zur Druckluftzufuhr aufweist.

2. Vorrichtung nach Anspruch 1
**dadurch gekennzeichnet,**
**dass** die Lagerrinne (7) und die Lagerschulter (28) im Querschnitt ineinandergreifend ausgebildet sind.

3. Vorrichtung nach Anspruch 1
**dadurch gekennzeichnet,**
**dass** die Ausbildung von der Lagerschulter (28) und der Lagerrinne (7) derart ist, dass der Rotor (1) durch den Lagerring (20) radial und axial geführt gelagert ist.

4. Vorrichtung nach einem der voranstehenden Ansprüche,
**dadurch gekennzeichnet,**
**dass** die Lagerrinne (7) im Querschnitt z. B. U, V oder W-förmig ausgebildet ist, wobei die Lagerschulter (28) eine korrespondierend hierzu ausgebildete Form aufweist.

5. Vorrichtung nach einem der voranstehenden Ansprüche,
**dadurch gekennzeichnet,**
**dass** die Schenkel der im Querschnitt winkligen Lagerschulter (28) des Lagerringes (20) umfangsverteilt die Öffnungen (28a, 28b) zur Druckluftzufuhr aufweisen.

6. Vorrichtung nach einem der voranstehenden Ansprüche,
**dadurch gekennzeichnet,**
**dass** die Druckluftöffnungen (28a, 28b) in den Schenkeln einander gegenüberliegend angeordnet sind.

7. Vorrichtung nach einem der voranstehenden Ansprüche
**dadurch gekennzeichnet,**
**dass** der Lagerring (10) mehrere Öffnungen (28c) zum Anschluss von Druckluftleitungen aufweist.
